# FASCICULE DE BREVET EUROPEEN

(11) **EP 3 204 220 B1**
(45) Date de publication et mention de la délivrance du brevet: **02.05.2018**
(21) Numéro de dépôt: 15784075.2
(22) Date de dépôt: 30.09.2015
(51) Int. Cl.: B29C 70/48, B29C 33/44

(54) **OUTILLAGE POUR LA FABRICATION D'UN MATÉRIAU COMPOSITE À MATRICE ORGANIQUE**
WERKZEUG ZUR HERSTELLUNG EINES VERBUNDWERKSTOFFS MIT EINER ORGANISCHEN MATRIX
TOOL FOR MANUFACTURING A COMPOSITE MATERIAL WITH AN ORGANIC MATRIX

(30) Priorité: 07.10.2014 FR 1459598
(43) Date de publication de la demande: 16.08.2017
(73) Titulaire: SAFRAN AIRCRAFT ENGINES, 75015 Paris (FR)
(72) Inventeur: MAGNAUDEIX, Dominique, Michel, Serge, F-77550 Moissy-Cramayel Cedex (FR); JAUSSAUD, Raoul, F-77550 Moissy-Cramayel Cedex (FR)
(74) Mandataire: David, Alain
(86) Numéro de dépôt international: PCT/FR2015/052608
(87) Numéro de publication internationale: WO 2016/055717

(56) Documents cités:
- EP-A1- 2 181 823
- WO-A1-2013/114051
- DE-A1- 3 820 084

## Description

### Arrière-plan de l'invention

La présente invention concerne le domaine des matériaux composites comprenant une matrice polymère renforcée par une structure fibreuse et plus particulièrement l'utilisation de ces matériaux dans la fabrication de pièces aéronautiques ou de turbomachines.

Dans le domaine aéronautique, on cherche à réduire la masse des composants des moteurs tout en maintenant à un haut niveau leurs propriétés mécaniques. Plus particulièrement, dans une turbomachine aéronautique, le carter de soufflante définissant le contour de la veine d'entrée d'air du moteur et à l'intérieur duquel est logé le rotor supportant les aubes de la soufflante est maintenant réalisé en matériau composite. De forme de révolution, il comprend une virole pourvue à ses extrémités amont et aval de brides externes pour la fixation à d'autres parties structurelles du moteur, comme le profil d'entrée d'air à l'amont et le carter intermédiaire à l'aval. Le carter supporte en outre divers composants et doit pouvoir retenir les débris résultant d'une rupture d'aube de soufflante ou les objets ingérés en entrée du moteur.

La fabrication d'un carter de soufflante en matériau composite débute par la mise en place par enroulement d'un renfort en fibres sur un mandrin dont le profil épouse celui du carter à réaliser. Le renfort fibreux peut être réalisé, par exemple, par tissage tridimensionnel ou multicouche comme cela est décrit dans le brevet US 8 322 971. Ce renfort fibreux constitue une préforme fibreuse tubulaire formant une seule pièce avec des flasques correspondant aux brides du carter. La fabrication se poursuit par la densification de la préforme fibreuse par une matrice polymère qui consiste à imprégner la préforme par une résine et à polymériser cette dernière pour obtenir la pièce finale.

Un outillage d'injection d'une résine polymère dans une préforme pour la fabrication d'une pièce de révolution en matériau composite comprenant une cavité interne en contre-dépouille est connu de la publication DE 38 20 084 A1.

L'invention concerne plus particulièrement le mode de fabrication où l'imprégnation de la préforme fibreuse est réalisée par le procédé de moulage par injection dit RTM (pour Resin Transfert Moulding). Selon ce procédé, on enferme la préforme fibreuse en la compactant dans un moule rigide de géométrie figée comprenant une première partie formant support de la préforme fibreuse et un contre moule que l'on vient déposer sur la préforme fibreuse et dont la forme correspond au carter que l'on souhaite obtenir, et on injecte la résine sous pression et température contrôlée à l'intérieur du moule après avoir rapproché les parois des deux parties de moule et y avoir fait le vide le cas échéant. Une fois la résine injectée, on procède à sa polymérisation par chauffage du moule et après l'injection et la polymérisation, la pièce finale est démoulée puis détourée pour enlever les excès de résine et les chanfreins sont usinés pour obtenir le carter souhaité.

Pour faciliter ce démoulage, l'outillage d'injection qui doit être parfaitement étanche est en général constitué d'un moule à deux fûts intérieurs adjacents reproduisant la veine, de deux flasques amont et aval pour former les deux rebords du carter, et d'un contre-moule formé de plusieurs secteurs extérieurs. Ces secteurs et les flasques amont / aval sont retirés par l'extérieur. Les deux fûts intérieurs sont désaccouplés puis retirés de chaque côté du carter en suivant les dépouilles naturelles de la veine.

Or, dans certaines configuration de carter, il existe un resserrement de la veine à l'amont du carter, la veine évoluant par exemple d'un premier diamètre à l'amont à un deuxième diamètre plus important au niveau d'une zone centrale puis à nouveau à un troisième diamètre plus petit à l'aval, qui interdit tout démoulage de la pièce finale du fait de l'impossibilité de retrait du fût amont. La différence entre petit et grand diamètre peut par exemple être comprise entre 40 et 80 millimètres pour un diamètre moyen du carter pouvant être de l'ordre de 1500 millimètres à 3500 millimètres.

### Objet et résumé de l'invention

L'invention a donc pour but de proposer un outillage d'injection pour la fabrication d'un carter de turbine à gaz en matériau composite présentant une cavité interne en contre-dépouille qui permette de réaliser simplement le démoulage, et ce notamment sans augmenter de manière significative les étapes mises en oeuvre ainsi que la masse du moule.

Ce but est atteint grâce à un outillage d'injection, selon la revendication 1, d'une résine polymère dans une préforme fibreuse pour la fabrication d'une pièce de révolution en matériau composite comprenant une cavité interne en contre-dépouille, caractérisé en ce que, pour permettre un démoulage de ladite pièce une fois l'injection et la polymérisation de ladite résine polymère effectuée, il comporte, disposé au moins au niveau de ladite cavité interne, d'une part une couronne sectorisée formée d'au moins trois inserts jointifs dont l'un formant clef de cintre et dont la surface externe épouse ladite cavité interne en contre-dépouille et la surface interne comporte une dépouille naturelle et d'autre part un fût conique solidarisé à ladite surface interne de ladite couronne sectorisée dont il assure le support et dont le retrait, une fois désolidarisée de ladite couronne sectorisée, s'effectue selon ladite dépouille naturelle créée par ladite surface interne de ladite couronne sectorisée.

Ainsi, le démoulage de pièces de révolution présentant une cavité interne en contre-dépouille peut être obtenu simplement par la seule adjonction au support de moule rendu démoulant d'une pièce supplémentaire sectorisée à clef de cintre.

Selon un mode de réalisation préférentiel, ladite couronne sectorisée comporte au moins trois inserts, ledit insert formant clef de cintre couvrant un angle compris entre 20° et 40° et plus particulièrement quatre inserts, trois inserts couvrant chacun un angle de 110°, le quatrième formant clef de cintre couvrant l'angle restant de 30°.

De préférence, lesdits inserts sont fixés par vissage sur ledit fût amont et comportent des organes de manipulation pour permettre leur extraction par un palan ou tout système de levage analogue.

Pour assurer le centrage angulaire desdits inserts sur ledit fût conique, des éléments mutuels de centrage sont avantageusement disposés en vis à vis sur lesdits inserts et ledit fût conique respectivement et pour assurer le centrage annulaire desdits inserts sur ledit fût conique, des pentes annulaires sont disposées à une des extrémités desdits inserts.

Avantageusement, lesdits inserts sont constitués en un matériau métallique dont les propriétés mécaniques et de stabilité dimensionnelle facilitent la gestion de la dilatation lors de la polymérisation par chauffage ou en une tôle métallique comportant des trous borgnes d'allégement entre des raidisseurs sur la face destinée à venir en contact avec ledit fût amont.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1 est une vue en perspective d'un moteur aéronautique comportant un carter de soufflante obtenu à partir de l'outillage d'injection conforme à l'invention,
- la figure 2 est une demi-vue en coupe axiale de l'outillage d'injection permettant la fabrication du carter de soufflante de la figure 1, et
- les figures 3A à 3F illustrent les étapes successives mises en oeuvre dans l'outillage d'injection de la figure 2 pour le démoulage du carter de soufflante de la figure 1.

### Description détaillée de modes de réalisation

L'invention s'applique d'une manière générale à toute pièce en matériau composite à matrice polymère de turbine à gaz. L'invention sera toutefois décrite ci-après dans le cadre de son application à un carter de soufflante de moteur aéronautique à turbine à gaz.

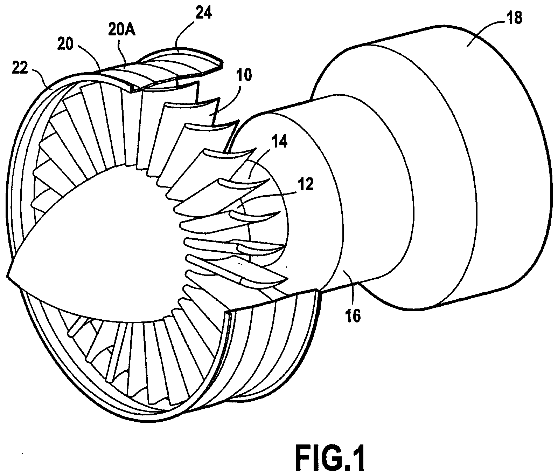

La figure 1 montre de façon schématique un tel moteur aéronautique à turbine à gaz comprenant, de l'amont vers l'aval dans le sens de l'écoulement du flux gazeux, une soufflante 10 disposée en entrée du moteur, un compresseur 12, une chambre de combustion 14, une turbine haute-pression 16 et une turbine basse pression 18. Le moteur comporte des carters successifs correspondant à différents éléments du moteur et dont la surface interne définit la veine d'entrée d'air du moteur. Ainsi, la soufflante 10 est entourée par un carter de soufflante 20 présentant une forme de révolution et réalisé à partir d'un renfort en fibres par exemple de carbone, verre, aramide ou céramique, densifié par une matrice en polymère, par exemple époxyde, bismaléimide ou polyimide. Le renfort de fibres est obtenu de façon connue par tissage tridimensionnel ou multicouche, par exemple un tissage à armure "interlock", et la matrice par voie liquide suivant les procédés d'injection connus comme le procédé de moulage dit RTM.

Le carter de soufflante 20 est muni de brides externes 22, 24 à ses extrémités amont et aval afin de permettre son montage et sa liaison avec d'autres éléments du moteur. Entre ses extrémités amont et aval, le carter de soufflante comporte une partie intermédiaire (cavité interne en contre-dépouille 20A) ayant un plus fort diamètre que les parties d'extrémité en se raccordant progressivement à celle-ci, laquelle partie intermédiaire interdit le recours aux outillages d'injection RTM standards.

Selon l'invention, il est donc proposé pour résoudre le problème posé par le démoulage d'une pièce de révolution ayant une cavité interne en contre-dépouille, d'ajouter au fût amont support de la pièce au niveau et de part et d'autre de cette cavité, pour qu'il puisse rester démoulant par l'amont du carter, une pièce supplémentaire entre la préforme fibreuse injectée et le fût amont qui recréée une dépouille naturelle rendant le démoulage à nouveau possible.

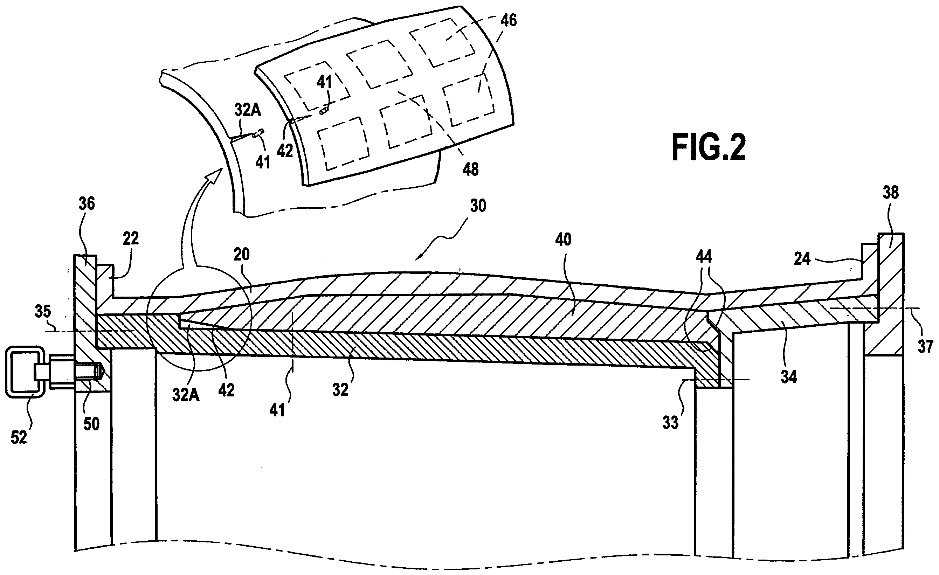

La figure 2 montre une section de l'outillage d'injection selon l'invention supportant le carter de soufflante 20 sans le contre-moule sectorisé extérieur venant classiquement fermer le moule.

Plus précisément, cet outillage 30 comporte, comme il est connu, un fût amont 32 et un fût aval 34 ainsi qu'un flasque amont 36 et un flasque aval 38. Les fûts amont et aval sont jointifs sur un diamètre rentrant (en général le diamètre le plus faible de la veine) pour permettre un démoulage suivant les dépouilles naturelles de la veine de part et d'autre de cette jonction et sont solidarisés entre eux à cette jonction par des moyens de liaisons tels des vis (voir le trait d'axe référencé 33). Les flasques amont et aval destinés au moulage des brides externes 22, 24 sont aussi solidarisés au fût amont et au fût aval respectivement par exemple par une liaison vissée (voir les traits d'axes référencés 35 et 37). On notera que le flasque amont et le fût amont peuvent aussi être issus d'une même pièce, de même que le flasque aval et le fût aval.

Conformément à l'invention, cet outillage comporte en outre une pièce supplémentaire formée d'une couronne sectorisée 40 d'au moins trois et typiquement quatre inserts 40A-40D jointifs et fixés par exemple par vissage (voir le trait d'axe référencé 41) sur le fût amont 32 supportant la préforme fibreuse au niveau et de part et d'autre de la cavité interne en contre-dépouille et dont la forme légèrement conique facilite son démoulage par l'amont. De préférence, ce vissage sera réalisé aussi près que possible de l'extrémité libre de ce fût amont 32 afin d'en faciliter l'accès lors de son retrait. En outre, pour assurer le centrage angulaire des inserts 40 sur le fût amont 32 et le fût aval 34, des éléments mutuels de centrage 32A, 42 sont avantageusement disposés sur chacune de ces pièces.

Plus précisément, la couronne sectorisée dont la surface externe épouse la cavité interne en contre-dépouille (ainsi que ses abords amont et aval) présente une surface interne qui comporte une dépouille naturelle (c'est-à-dire une inclinaison de quelques degrés suffisante pour permettre son démoulage à l'image de celle relative à la veine de l'art antérieur). Des pentes annulaires 44 sont prévues à une de ses extrémités pour assurer son centrage *annulaire (axial et radial)* à la fois sur le fût amont 32 et le fût aval 34. Cette couronne est constituée d'un matériau métallique dont les propriétés mécaniques et de stabilité dimensionnelle facilitent la gestion de la dilatation lors de la polymérisation par chauffage, par exemple une tôle d'acier dont l'épaisseur est par exemple comprise entre 50 millimètres à 80 millimètres, comportant des trous borgnes d'allégement 46 entre des raidisseurs 48 sur la face en contact avec le fût amont. Le matériau des fûts et des inserts est de préférence le même.

Pour permettre leur démontage, lorsque la couronne sectorisée comporte quatre inserts, trois de ces inserts sont destinés à couvrir chacun un angle de 110° alors que le quatrième couvre l'angle restant de 30° et forme en quelque sorte une clef de cintre pour la pièce supplémentaire. Toutefois, selon le nombre total d'inserts (qui peut par exemple varier de trois à cinq) et leurs dimensions, le quatrième insert de clef de voûte peut couvrir un angle pouvant par exemple varier de 20 degrés à 40 degrés. Les inserts doivent en effet être bien ajustés avec le fût amont car l'injection de la résine est effectuée sous pression après génération de vide dans le moule. Les propriétés mécaniques et de stabilité dimensionnelle du matériau pour la couronne facilitent la bonne réussite de l'injection. Bien entendu, des classiques joints d'étanchéité (non représentés) doivent aussi être prévus entre les différentes pièces du moule pour garantir qu'il soit bien étanche.

Le processus d'injection durant sa phase de moulage ne diffère pas du processus classique d'injection RTM, la préforme fibreuse étant placée dans le moule fermé de manière étanche. Puis, on injecte la résine liquide thermodurcissable à faible viscosité dans le moule pour imprégner toute la partie fibreuse de la préforme. La polymérisation est ensuite réalisée généralement par chauffage du moule selon un ou plusieurs cycles consécutifs pour parvenir au degré de densification souhaité. L'injection et la polymérisation achevées, la pièce finalement obtenue peut alors être démoulée selon des étapes cette fois distinctes de celles mises en oeuvre dans le processus classique du fait de la modification de l'outillage.

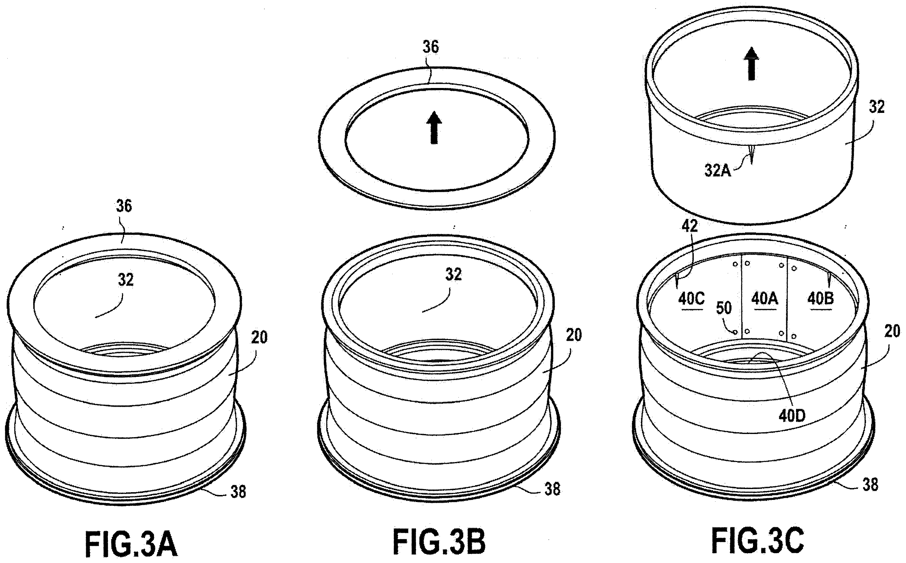

Les étapes de démoulage sont illustrées séquentiellement aux figures 3A à 3F. La figure 3A montre le moule à l'issue de l'étape de polymérisation, le contre-moule ayant été retiré dans une première étape du démoulage et la surface extérieure de la pièce finale a donc la forme extérieure du carter à réaliser. La seconde étape illustrée à la figure 3B consiste après dévissage des fixations 35 à retirer le flasque amont 36 afin de libérer le fût amont 32 qui désolidarisé du fût aval 34 après dévissage des fixations 33 peut alors être lui-même retiré dans une étape suivante illustrée à la figure 3C (on aura bien entendu pris soin préalablement d'ôter les fixations 41 avec les inserts). Le retrait du fût amont 32 et le retrait du fût aval 34 peuvent être effectués simultanément, au lieu d'être effectués l'un après l'autre.

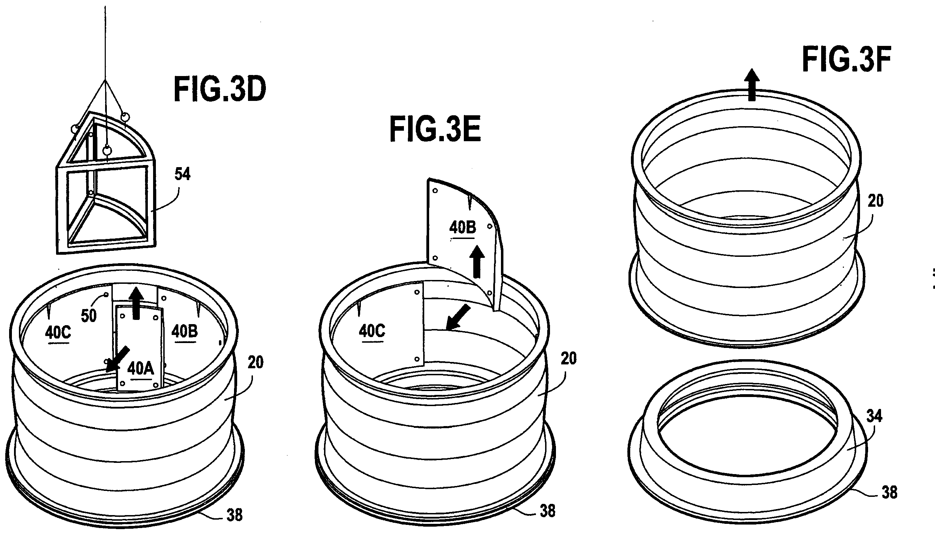

Ce retrait du fût amont 32 permet de libérer les inserts 40A-40D qui peuvent être ôtés en commençant par l'insert clef de cintre 40A (nouvelle étape de la figure 3D) avant de faire de même avec les autres inserts restants 40B-40D comme l'illustre la figure 3E. La pièce finale peut enfin à son tour, dans une dernière étape illustrée à la figure 3F, être extraite du moule dont ne subsiste alors que le fût aval 34 et le flasque aval 38. Cette pièce finale est enfin détourée pour enlever l'excès de résine et obtenir le carter de soufflante 20.

Pour toutes ces étapes, du fait de leurs dimensions (plusieurs mètres de diamètre) et de leurs masses (plusieurs tonnes), toutes ces pièces doivent être manipulées avec précaution et les retraits s'effectueront donc de préférence au moyen d'un palan ou tout autre système de levage similaire, chacune des pièces du moule comportant alors des organes nécessaires à leur déplacement. Ces organes de manipulation comprennent par exemple des perçages de fixation 50 coopérant par vissage avec des anneaux d'arrimages 52 (voir la figure 2) montés sur des têtes d'écrous ou tout autre perçage pour solidarisation avec par exemple un cadre de manutention 54 (voir la figure 3D) ayant lui-même des anneaux d'arrimage coopérant par engagement avec des crochets associés à un palan. De manière générale, la technique de manipulation et de fixation de grandes pièces relativement à des systèmes de manutention de charges lourdes et/ou volumineuses, via des anneaux d'arrimages vissés audites charges, est de type connue en soi.

On notera que pour éviter toute détérioration de la pièce finale lors de l'ultime étape de retrait, ce dernier s'effectuera de préférence au moyen d'un anneau de manutention, d'une sangle ou tout autre moyen équivalent de manutention de grandes pièces de révolution. Ainsi, la pièce finale de carter ne comporte pas d'organe spécifique pour sa manipulation et ne risque pas d'être détériorée lors de cette manipulation.

## Revendications

1. Outillage d'injection d'une résine polymère dans une préforme fibreuse pour la fabrication d'une pièce de révolution en matériau composite (20) comprenant une cavité interne en contre-dépouille (20A), comportant, pour permettre un démoulage de ladite pièce une fois l'injection et la polymérisation de ladite résine polymère effectuée, disposé au moins au niveau de ladite cavité interne, d'une part une couronne sectorisée (40) formée d'au moins trois inserts jointifs (40A-40D) dont l'un (40A) formant clef de cintre et dont la surface externe épouse ladite cavité interne en contre-dépouille et la surface interne comporte une dépouille naturelle et d'autre part un fût conique (32) solidarisé à ladite surface interne de ladite couronne sectorisée dont il assure le support et dont le retrait, une fois désolidarisée de ladite couronne sectorisée, s'effectue selon ladite dépouille naturelle créée par ladite surface interne de ladite couronne sectorisée.

2. Outillage d'injection selon la revendication 1, **caractérisé en ce que** ledit insert formant clef de cintre couvrant un angle compris entre 20° et 40°.

3. Outillage d'injection selon la revendication 2, **caractérisé en ce que** ladite couronne sectorisée comporte quatre inserts, trois inserts couvrant chacun un angle de 110°, le quatrième formant clef de cintre couvrant l'angle restant de 30°.

4. Outillage d'injection selon la revendication 1, **caractérisé en ce que** lesdits inserts sont fixés par vissage (41) sur ledit fût conique.

5. Outillage d'injection selon la revendication 1, **caractérisé en ce que**, pour assurer le centrage angulaire desdits inserts sur ledit fût conique, des éléments mutuels de centrage (32A, 42) sont disposés en vis à vis sur lesdits inserts et ledit fût conique respectivement.

6. Outillage d'injection selon la revendication 5, **caractérisé en ce que**, pour assurer le centrage annulaire desdits inserts sur ledit fût conique, des pentes annulaires (44) sont disposées à une des extrémités desdits inserts.

7. Outillage d'injection selon la revendication 1, **caractérisé en ce que** lesdits inserts comportent des organes de manipulation (50) pour permettre leur extraction par un palan ou tout système de levage analogue.

8. Outillage d'injection selon la revendication 1, **caractérisé en ce que** lesdits inserts sont constitués en un matériau métallique dont les propriétés mécaniques et de stabilité dimensionnelle facilitent la gestion de la dilatation lors de la polymérisation par chauffage.

9. Outillage d'injection selon la revendication 1, **caractérisé en ce que** lesdits inserts sont constitués en une tôle métallique comportant des trous borgnes d'allégement (46) entre des raidisseurs (48) sur la face destinée à venir en contact avec ledit fût conique.

10. Outillage d'injection selon l'une quelconque des revendications 1 à 9, **caractérisé en ce que** ladite pièce de révolution en matériau composite est un carter de soufflante.

## Patentansprüche

1. Werkzeug zum Einspritzen eines Polymerharzes in einen Faservorformling für die Herstellung eines Rotationsteils aus Verbundwerkstoff (20) mit einem hinterschnittenen Innenhohlraum (20A), welches - um ein Ausformen des Teils zu ermöglichen, sobald das Einspritzen und die Polymerisation des Polymerharzes vollzogen ist, wenigstens im Bereich des Innenhohlraums angeordnet - einerseits einen in Sektoren unterteilten Kranz (40) umfasst, der von wenigstens drei miteinander verbundenen Einsätzen (40A-40D) gebildet ist, von denen der eine (40A) einen Bogenscheitel bildet, und dessen Außenfläche sich dem hinterschnittenen Innenhohlraum anpasst und dessen Innenfläche eine natürliche Formschräge aufweist, sowie andererseits einen konischen Schaft (32), welcher mit der Innenfläche des in Sektoren unterteilten Kranzes, dessen Halt er sicherstellt, fest verbunden ist, und dessen Herausziehen, sobald von dem in Sektoren unterteilten Kranz getrennt, entlang der durch die Innenfläche des in Sektoren unterteilten Kranzes erzeugten natürlichen Formschräge erfolgt.

2. Spritzwerkzeug nach Anspruch 1, **dadurch gekennzeichnet, dass** der den Bogenscheitel bildende Einsatz einen Winkel im Bereich zwischen 20° und 40° abdeckt.

3. Spritzwerkzeug nach Anspruch 2, **dadurch gekennzeichnet, dass** der in Sektoren unterteilte Kranz vier Einsätze umfasst, wobei drei Einsätze jeweils einen Winkel von 110° abdecken, wobei der den Bogenscheitel bildende vierte den verbleibenden Winkel von 30° abdeckt.

4. Spritzwerkzeug nach Anspruch 1, **dadurch gekennzeichnet, dass** die Einsätze durch Verschrauben (41) an dem konischen Schaft befestigt sind.

5. Spritzwerkzeug nach Anspruch 1, **dadurch gekennzeichnet, dass** zum Sicherstellen der Winkelzentrierung der Einsätze an dem konischen Schaft gegenseitige Zentrierelemente (32A, 42) an den Einsätzen bzw. dem konischen Schaft gegenüberliegend angeordnet sind.

6. Spritzwerkzeug nach Anspruch 5, **dadurch gekennzeichnet, dass** zum Sicherstellen der Ringzentrierung der Einsätze an dem konischen Schaft Ringschrägen (44) an einem der Enden der Einsätze angeordnet sind.

7. Spritzwerkzeug nach Anspruch 1, **dadurch gekennzeichnet, dass** die Einsätze Handhabungsorgane (50) umfassen, um ihr Herausziehen durch einen Flaschenzug oder jedwedes ähnliche Hebesystem zu ermöglichen.

8. Spritzwerkzeug nach Anspruch 1, **dadurch gekennzeichnet, dass** die Einsätze aus einem metallischen Werkstoff ausgebildet sind, dessen mechanische und Maßbeständigkeits-Eigenschaften die Steuerung der Ausdehnung während der Polymerisation durch Erhitzen erleichtern.

9. Spritzwerkzeug nach Anspruch 1, **dadurch gekennzeichnet, dass** die Einsätze aus einem Metallblech ausgebildet sind, das Erleichterungssacklöcher (46) zwischen Versteifungen (48) auf der Seite umfasst, welche dazu bestimmt ist, mit dem konischen Schaft in Kontakt zu kommen.

10. Spritzwerkzeug nach einem der Ansprüche 1 bis 9, **dadurch gekennzeichnet, dass** das Rotationsteil aus Verbundwerkstoff ein Gebläsegehäuse ist.

## Claims

1. Injection tooling for injecting a polymer resin into a fiber preform for fabricating a part in the form of a body of revolution out of composite material (20), the part having an internal cavity with back-draft (20A), the tooling comprising, in order to enable said part to be unmolded after said polymer resin has been injected and polymerized, arranged at least in said internal cavity, firstly a sectorized ring (40) made up of at least three mutually touching inserts (40A-40D) including one (40A) forming a "keystone", the ring having an outside surface that matches said internal cavity with back-draft and an inside surface that presents natural draft, and secondly a conical drum (32) secured to said inside surface of said sectorized ring to support it and that is withdrawn, once separated from said sectorized ring, relying on said natural draft created by said inside surface of said sectorized ring.

2. Injection tooling according to claim 1, **characterized in that** said keystone-forming insert occupies an angle lying in the range 20° to 40°.

3. Injection tooling according to claim 2, **characterized in that** said sectorized ring comprises four inserts, three inserts each occupying an angle of 110°, and a keystone-forming fourth insert occupying the remaining angle of 30°.

4. Injection tooling according to claim 1, **characterized in that** said inserts are secured to said conical drum by screw-fastening (41).

5. Injection tooling according to claim 1, **characterized in that**, in order to center said insert angularly relative to said conical drum, mutual centering elements (32A, 42) are arranged facing one another respectively on said insert and on said conical drum.

6. Injection tooling according to claim 5, **characterized in that**, in order to center said inserts angularly relative to said conical drum, annular slopes (44) are arranged at one of the ends of said inserts.

7. Injection tooling according to claim 1, **characterized in that** said inserts include handling members (50) to enable them to be extracted by a hoist or any analogous lifting system.

8. Injection tooling according to claim 1, **characterized in that** said inserts are made of a metal material having mechanical properties and dimensional stability that facilitates expansion during polymerization by heating.

9. Injection tooling according to claim 1, **characterized in that** said inserts are made of metal sheet including weight-reducing blind holes (46) between stiffeners (48) on the face that is to come into contact with said conical drum.

10. Injection tooling according to any one of claims 1 to 9, **characterized in that** said body of revolution made out of composite material is a fan casing.
